# EUROPEAN PATENT APPLICATION

(11) **EP 3 926 991 A1**
(43) Date of publication of application: **22.12.2021**
(21) Application number: 21179579.4
(22) Date of filing: 15.06.2021
(51) Int. Cl.: H04W 12/02, G06F 21/62

(54) **SYSTEMS AND METHODS FOR MANAGING DATA PRIVACY IN BUILDING MANAGEMENT SYSTEMS**

(30) Priority: 15.06.2020 US 202016902057
(71) Applicant: Honeywell International Inc., Charlotte, NC 28202 (US)
(72) Inventor: PALANIVEL, Rajkumar, Charlotte, 28202 (US); GALUSH, Jerry, Charlotte, 28202 (US); BEAUDET, Douglas, Charlotte, 28202 (US); BOLDUAN, Luke W., Charlotte, 28202 (US); OINAM, Khaba, Charlotte, 28202 (US); BOHNE, Matthew, Charlotte, 28202 (US)
(74) Representative: Haseltine Lake Kempner LLP

(57) **Abstract**

Methods and systems for managing data privacy of personal identifiable information in a building management system may include presenting a data privacy survey via a user interface of a data processing system. The data privacy survey may identify a plurality of types of personal identifiable information (PII) that will be collected by the building management system, and a plurality of data privacy settings for each of the plurality of types of PII. A setting change to at least one of the plurality of data privacy settings for at least one of the plurality of types of PII may be set, in which one or more constraints in the building management system for each of the plurality of types of PII may be implemented in the building management system.

## Description

### Technical Field

The present disclosure relates generally to data privacy control. More particularly, the present disclosure relates to systems and methods for managing data privacy with respect to building management systems.

### Background

Building management systems (BAS) are routinely used to monitor, control, and automate building controls, which may include security systems, surveillance systems, environment control systems, etc. In some systems, personally identifiable information (PII) is captured and stored within the system. An increasing level of security defense mechanisms have been needed as these systems have evolved from closed proprietary systems to convenient, connected, and open systems over the years. Open systems were adopted in a trend shift for increased convenience, improved connectivity, and improved productivity. However, these systems have become more vulnerable to exploits due to the widespread knowledge about open system vulnerabilities, leaving PII vulnerable as well. Further, privacy compliance laws have changed over the years, creating a need for updated privacy compliance management. Among other things, industrial facilities have used public-key infrastructures along with digital certificates to help increased security in their industrial control systems. However, improved techniques to help secure control systems such as building management systems, as well as PII, would be desirable.

### Summary

The present disclosure relates generally to data privacy control, and more specifically to systems and methods for managing privacy data to maintain compliance with privacy regulations in association with building management systems. Generally, privacy parameters may be received regarding personal identifiable information and a building management system may operate in accordance with the received privacy parameters.

In one example, a method for managing data privacy of personal identifiable information in a building management system may include presenting a data privacy survey via a user interface of a data processing system. The data privacy survey may identify a plurality of types of personal identifiable information (PII) that may be collected by the building management system, and a plurality of data privacy settings for each of the plurality of types of PII. The method may include receiving a setting change to at least one of the plurality of data privacy settings for at least one of the plurality of types of PII, setting one or more constraints in the building management system for each of the plurality of types of PII, wherein the one or more constraints for each of the plurality of types of PII may be based at least in part on the corresponding plurality of data privacy settings. The method may further include operating the building management system in accordance with the set constraints.

In another example, a building management system may include a memory for storing a plurality of types of personal identifiable information (PII) that may be collected by the building management system, and a plurality of data privacy settings for each of the plurality of types of PII. The system may include a user interface, and a processor which may be operatively coupled to the memory and the user interface. The processor may present a data privacy survey via the user interface. The data privacy survey may identify the plurality of types of personal identifiable information (PII) that may be collected by the building management system, and the plurality of data privacy settings for each of the plurality of types of PII. The processor may further receive a setting change to at least one of the plurality of data privacy settings for at least one of the plurality of types of PII, set one or more constraints for each of the plurality of types of PII, wherein the one or more constraints for each of the plurality of types of PII may be based at least in part on the corresponding plurality of data privacy settings. The processor may operate the building management system in accordance with the set constraints.

In another example, a non-transitory computer readable medium storing instructions thereon that when executed may cause a processor to present a data privacy survey, which may identify a plurality of types of personal identifiable information (PII) that may be collected by the building management system, and a plurality of data privacy settings for each of the plurality of types of PII. The instructions may cause the processor to receive a setting change to at least one of the plurality of data privacy settings for at least one of the plurality of types of PII, set one or more constraints for each of the plurality of types of PII, wherein the one or more constraints for each of the plurality of types of PII may be based at least in part on the corresponding plurality of data privacy settings. The instructions may further cause the processor to operate a building management system in accordance with the set constraints.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### Brief Description of the Figures

The disclosure may be more completely understood in consideration of the following description of various examples in connection with the accompanying drawings, in which:
Figure 1 is a schematic block diagram of an illustrative building management system in communication with a data privacy configurator;
Figure 2 is a schematic block diagram showing an illustrative data privacy configurator receiving one or more inputs and processing one or more outputs;
Figure 3 is a schematic block diagram showing an illustrative data privacy configurator;
Figure 4 is a flow diagram showing an illustrative method that may be carried out via a user of the building management system and the data privacy configurator of Figures 1 and 3;
Figure 5 is a flow diagram showing an illustrative method that may be carried out via the building management system and the data privacy configurator of Figures 1 and 3;
Figure 6 shows an illustrative screen of an illustrative data privacy survey;
Figure 7 shows an illustrative screen of the illustrative data privacy survey;
Figure 8 shows an illustrative screen of the illustrative data privacy survey;
Figure 9 shows an illustrative screen of the illustrative data privacy survey;
Figure 10 shows an illustrative screen of the illustrative data privacy survey;
Figure 11 shows an illustrative screen of the illustrative data privacy survey;
Figure 12 shows an illustrative screen of an illustrative data privacy configuration;
Figure 13 shows an illustrative screen of the illustrative data privacy configuration;
Figure 14 shows an illustrative screen of the illustrative data privacy configuration;
Figure 15 shows an illustrative screen of the illustrative data privacy configuration;
Figure 16 shows an illustrative screen of the illustrative data privacy configuration;
Figure 17 shows an illustrative screen in which a user may view their data privacy settings;
Figure 18 shows an illustrative screen in which a user may view their data privacy settings;
Figure 19 shows an illustrative screen in which a user may view their data privacy settings;
Figure 20 shows an illustrative screen in which a user may view their data privacy settings;
Figure 21 shows an illustrative screen in which a user may view their data privacy settings;
Figure 22 shows an illustrative screen in which a user is notified of a data breach;
Figure 23 shows an illustrative screen in which a user may view the data breach and their data privacy settings;
Figure 24 shows an illustrative screen in which a user may view the data breach and their data privacy settings;
Figure 25 shows an illustrative screen in which a user may view the data breach and submit a request;
Figure 26 shows an illustrative screen in which a user may view the data breach and submit a request;
Figure 27 shows an illustrative screen in which a user may view the data breach and submit a request;
Figure 28 shows an illustrative screen in which a user may view the data breach and view the request;
Figure 29 shows an illustrative screen in which a user is notified of a submitted request;
Figure 30 shows an illustrative screen in which the user may view the submitted request;
Figure 31 shows an illustrative screen in which the user may view the submitted request;
Figure 32 shows an illustrative screen in which the user may take action regarding the submitted request;
Figure 33 shows an illustrative screen in which the user may take action regarding the submitted request; and
Figure 34 is a flow diagram showing an illustrative method for managing data privacy of personal identifiable information in a building management system.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### Description

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranged by endpoints includes all numbers subsumed within that range (e.g., 1 to 5 includes, 1, 1.5, 2, 2.75, 3, 3.8, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

The present disclosure relates generally to data privacy control, and more specifically to systems and methods for managing privacy data to maintain compliance with privacy regulations in association with building management systems. Building management systems can include, for example, surveillance systems, environment control systems, security systems, and/or any other suitable building control system. Typical components of building management systems include, but are not limited to, heating units, air conditioning units (e.g., cooling units), blowers/fans, control panels, dampers, humidifiers, dehumidifiers, thermostats, occupancy sensors, access control devices, cameras, video recorders (e.g., video cameras, digital video recorders (DVRs), network video recorders (NVRs), video servers, streaming servers, database servers), network communication components, modems, routers, etc. Building management systems may include 10s, 100s, or even 1000s or more of components, where one or more of the components may be internet protocol (IP) enabled (e.g., IP enabled components) and are configured to communicate over one or more public and/or private networks. Since the building management system 10 may include one or more components connected to one or more networks, it is often desirable for the data (e.g., PII) of the building management system 10 to be secured from unauthorized access, unauthorized deletion, and/or unauthorized modification.

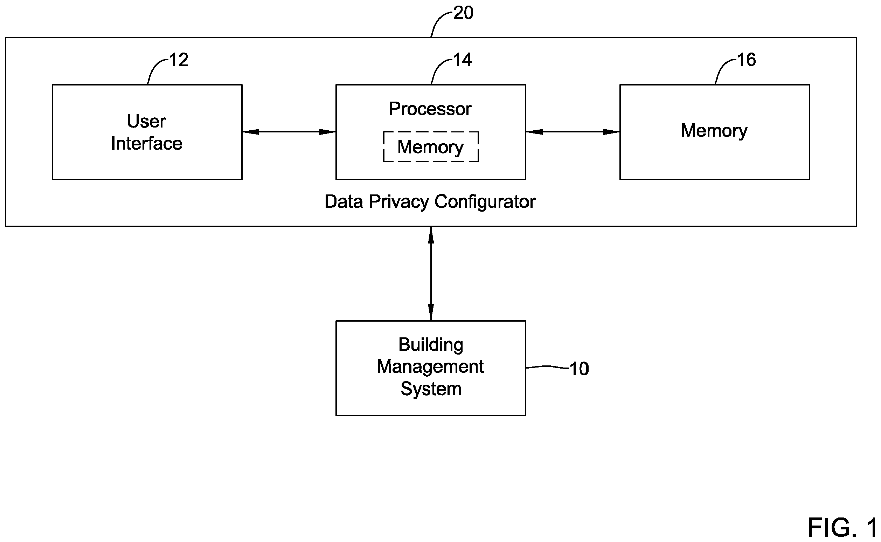

Figure 1 is a schematic block diagram of an illustrative building management system 10 in communication with a data privacy configurator 20. The building management system 10 may have one or more components including, but not limited to, one or more building management devices, one or more building management clients, and one or more user accounts through which one or more users may access the building management system 10. In some cases, data related to one or more user accounts may be stored on a server that may be one or more of the building management devices, but this is not required. In some cases, the server(s) storing the one or more accounts and/or the data related to the one or more user accounts may be separate from the building management devices. The building management devices, building management clients, and/or other suitable components of the building management system 10 may be configured to communicate with one another and/or other computing devices over one or more public and/or private wired and/or wireless networks.

The one or more networks on which the devices of the building management system 10 may communicate may be any suitable type of network that facilitates interaction (e.g., transfer of data, information, actions, requests, and/or other suitable communication) between the building management devices, the one or more building management clients, the user accounts, and/or other suitable components of the building management system 10. For example, networks include, but are not limited to, an Ethernet network, an electrical signal network, a pneumatic control signal network, and/or other suitable additional or alternative networks. The one or more networks may be or may include a local or private network (e.g., a local area network (LAN)) and/or global or public network (e.g., a wide area network (WAN)).

The building management devices may be any suitable type of device configured to facilitate management of a building. In some cases, the building management devices may include a computing device having a processor, a memory, an input/output (I/O) unit (e.g., which may include a communications unit), and/or other suitable computing components. In some cases, the I/O units may include a single I/O component or more than one I/O component each working individually or with one another. Example I/O units may be any type of communication ort configured to communicate with other components of the respective building management devices and building management clients, and/or other components of the building management system 10. Example types of I/O units may include wired ports, wireless ports, radio frequency (RF) ports, Low-Energy Bluetooth ports, Bluetooth ports, Near-Field Communication (NFC) ports, HDMI ports, Wi-Fi ports, Ethernet ports, VGA ports, serial ports, parallel ports, component video ports, S-video ports, composite audio/video ports, DVI ports, USB ports, optical ports, and/or other suitable ports. Example building management devices may include, but are not limited to, cameras, data recorders, database servers, streaming servers, video servers, thermostats, heating, ventilation, and air conditioning (HVAC) equipment, sensors, actuators, controllers, and/or other suitable devices. One example building management system 10 may include a surveillance system that has one or more building management devices.

In some cases, as shown in Figure 1, the building management clients may be any suitable type of device configured to facilitate user access to and/or communication with the building management devices. In some cases, it may be desirable for the building management clients to support privacy of the user's personally identifiable information (PII). In such cases, the building management client may include a computing device, such as the data privacy configurator 20, having a processor 14, a memory 16, a user interface 12, and/or other suitable computing components. In some cases, the building management clients may be or may include one or more of a thick client (e.g., a computing device and associated hardware) and/or a thin client (e.g., web browser). Example thick client may include a personal computer, a mobile phone, a tablet computer, a laptop computer, a server, etc. Example thin clients may include a web client (e.g., a web-based client having a website interface to communicate with the building management devices) a mobile application (app) (e.g., a mobile app having an interface to communicate with the building management system 10), etc. In one example of a building management client, the building management client may facilitate the user accessing his/her account for the building management system 10 by interacting with the user interface 12 of the building management client (e.g., the data privacy configurator 20) via a computer program, a website, and/or a web-based application.

The data privacy configurator 20 may include the processor 14, the memory 16, and the user interface 12. In some cases, the processor 14 may include a single processor or more than one processor working individually or with one another. The processor 14 may be configured to execute instructions, including instructions that may be loaded into the memory 16 and/or other suitable memory. Example processor components may include, but are not limited to, microprocessors, microcontrollers, multicore processors, graphical processing units, digital signal processors, application specific integrated circuits (ASICs), field programmable gate arrays (FGAs), discrete circuitry, and/or other suitable types of data processing devices.

The memory 16 of the data privacy configurator 20 may include a single memory component or more than one memory component each working individually or with one another. Example types of memory 16 may include random access memory (RAM), EEPROM, FLASH, suitable volatile storage devices, suitable non-volatile storage devices, persistent memory (e.g., read only memory (ROM), hard drive, Flash memory, optical disc memory, and/or other persistent memory), and/or other suitable types of memory. The memory 16 may be or may include a non-transitory computer readable medium.

The user interface 12 of the data privacy configurator 20 may include a display and/or a data input device such as a keyboard, a keypad, a joystick, a touch pad, and the like, but this is not required. In some cases, the data privacy configurator 20 may additionally or alternatively include a remote user interface that facilitates a user's interactions with the data privacy configurator 20. The user interface may be provided by a number of remote internet devices, including a smart phone, a tablet computer, a laptop computer, or a desktop computer. In some cases, the user interface may communicate with the data privacy configurator 20 via a router such as, for example, a Wi-Fi or internet router. In other cases, the user interface may be provided at the data privacy configurator 20, as indicated by the user interface 12.

Since the building management system 10 may include one or more components connected to one or more networks, it is often desirable for the data (e.g., PII) of the building management system 10 to be secured from unauthorized access, unauthorized deletion, and/or unauthorized modification. In some cases, components of the building management system 10 may require user authentication via a username and password, biometrics, and/or other suitable user identifying techniques,. The system may store user information such as, for example, the user's name, the user's phone number, the user's gender, the user's nationality, the user's Visa number, the user's passport number, the user's driver's license number, the user's photograph, the user's badge number, the user's government identification number, the user's license plate number, and the user's location. In some cases, such information may be stored in a central database to confirm the identity of the user, which may allow and provide appropriate access to the building management system 10. However, storing personally identifiable information (PII) in a central database may allow unauthorized access to and/or manipulation of data by inside threats (e.g., approved users) and/or outside threats (e.g., users that have not been approved for access). The user may be concerned about the security and privacy of their PII, thus it would be desirable to provide data privacy policies to enhance security and protection of the user's PII.

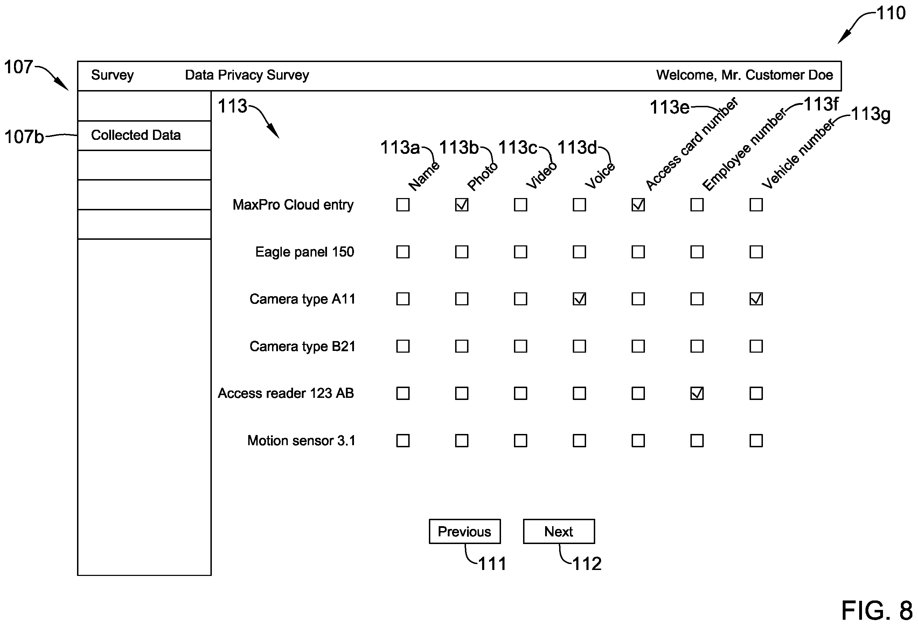

As discussed further below, the data privacy configurator 20 may be a component of the building management system 10, and may authenticate users and devices of and/or interacting with the building management system 10 and to secure the data, such as PII, stored within a memory (e.g., memory 16) of the building management system 10. The data privacy configurator 20 may be configured to manage data privacy of PII in the building management system 10. Managing the data privacy of PII may include the data privacy configurator 20 presenting a data privacy survey to a user (e.g. administrator or manager), via a user interface (e.g., user interface 12) of a data processing system. The data privacy survey may identify a plurality of types of personal identifiable information (PII) that will be collected by the building management system 10. In some cases, the system itself may help the user identify the types of PPI that will be collected by the system, depending on the configuration of the particular building management system (e.g. see FIG. 8 below).

The data privacy survey may also identify a plurality of data privacy settings for each of the plurality of types of collected PII. The user may update a setting change to at least one of the plurality of data privacy settings for at least one of the plurality of types of PII, which may be received by the data privacy configurator 20. The data privacy configurator 20 may then set one or more constraints in the building management system 10 for each of the plurality of types of PII, wherein the one or more constraints for each of the plurality of types of PII may be based at least in part on the corresponding plurality of data privacy settings, and then may operate the building management system 10 in accordance with the set constraints.

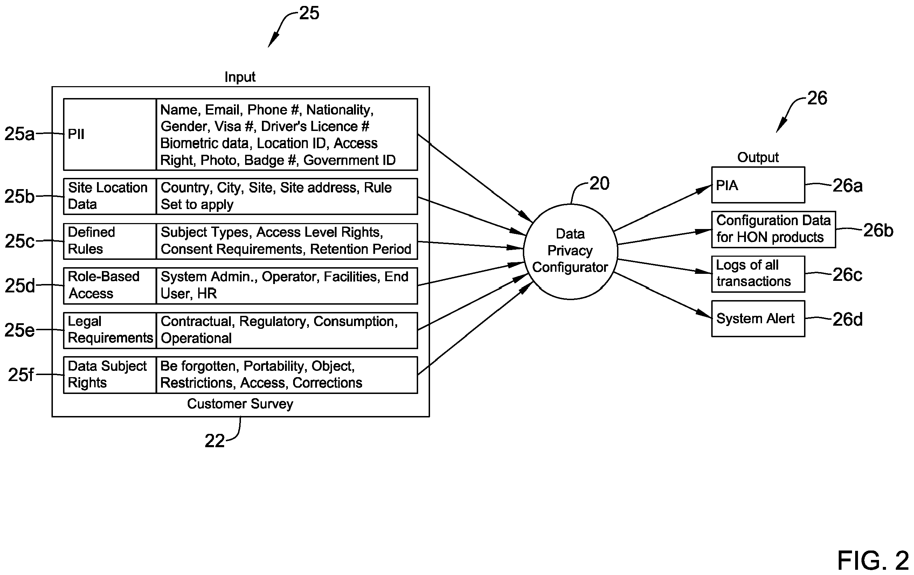

Figure 2 is a schematic block diagram showing the illustrative data privacy configurator 20 of Figure 1, receiving one or more inputs 25 and processing one or more outputs 26. The one or more inputs 25 may include a customer survey 22, which may be an example of the data privacy survey discussed with reference to Figure 1. The one or more inputs 25 included in the customer survey 22 may include personal identifiable information (PII) 25a, site location data 25b, a set of defined rules 25c, role-based access 25d, legal requirements 25e, and data subject rights 25f (collectively, the one or more inputs 25). In some cases, the PII 25a may include one or more of: a user's name, the user's email address, the user's phone number, the user's gender, the user's nationality, the user's Visa number, the user's passport number, the user's driver's license number, the user's photograph, the user's badge number, the user's government identification number, and the user's license plate number. These are just examples.

The site location data 25b may include a geographic location of the building management system 10 (and/or the location/country that the PPI will be stored), which may include a country, a city, a site, and a site address in which the building management system 10 is located. Further, a set of rules to be applied based on the geographic location of the building management system 10, may be received by the data privacy configurator 20. For example, if the building management system 10 is located in Europe, the set of rules may include the General Data Protection Regulation (GDRP), whereas if the building management system 10 is located in the United Stated, a different set of rules may apply. The defined rules 25c may include subject types, access level rights, consent requirements, and a retention period for data stored.

Role-based access 25d may include the type of role the user holds as a user of the building management system 10. For example, user roles may include, a system administrator, a system operator, a facilities manager, an end user, a human resources employee, and/or any other suitable role. The role-based access 25d may be used to determine the PII data fields that can be viewed by a particular user, depending on the role of the particular user to help enforce access to PII on a need-to-know basis.

The legal requirements 25e may include contractual requirements, regulatory requirements, consumption requirements, operations requirements, and/or any other suitable legal requirements. The legal requirements 25e may determine the business purpose for capturing the PII, and may determine what data elements are eligible for inclusion under the data subject rights 25f. The data subject rights 25f, which reflect the privacy rights granted to the individual users of the building management system, may include the right to be forgotten, the right to data portability, the right to object, the right to access, the right to define restrictions, the right to corrections, and/or any other suitable privacy rights. The data subject rights 25f may determine which data fields will be available for viewing and enforce the processing of PII. For example, requests for data portability by a user may be handled via a secure portal in which the user may provide a one-time passcode to access the his/her information and download the information. In some cases, once accessed, the information is no longer available for viewing. In some cases, data subject requests may be processed automatically, while in other cases, a human resources employee or a facilities manager may need to access the system to process the request from the user.

In some cases, the one or more inputs 25 may include a plurality of data privacy settings for each of the plurality of types of PII 25a, such as, for example, a sensitivity setting relating to the sensitivity of the corresponding PII 25a, a legal requirement (e.g., legal requirements 25e) setting relating to whether the corresponding type of PII must be retained for legal reasons, a role access (e.g., role-based access 25d) setting relating to which user account types can access the corresponding type of PII, a user rights (e.g., data subject rights 25f) setting relating to the user rights granted to the user for corresponding types of PII, a location (site location data 25b) setting relating to the location that the corresponding type of PII was collected and/or stored, and rules (e.g., defined rules 25c) setting relating which of a plurality of rules apply to the corresponding type of PII.

The user may indicate via the customer survey 22 one or more setting changes for each of the plurality of data privacy settings for one or more of the one or more inputs 25. The data privacy configurator 20 may receive the setting changes from the customer survey 22, and may produce one or more outputs 26. The one or more outputs 26 may include a privacy impact assessment (PIA) 26a, configuration data for products 26b, a log of all transactions 26c, and a system alert 26d (collectively one or more outputs 26), in which an alert is sent to the user if and when any edits to the building management system 10 and/or the settings for the plurality of data privacy settings that are not compliant with the user defined data privacy settings are found.

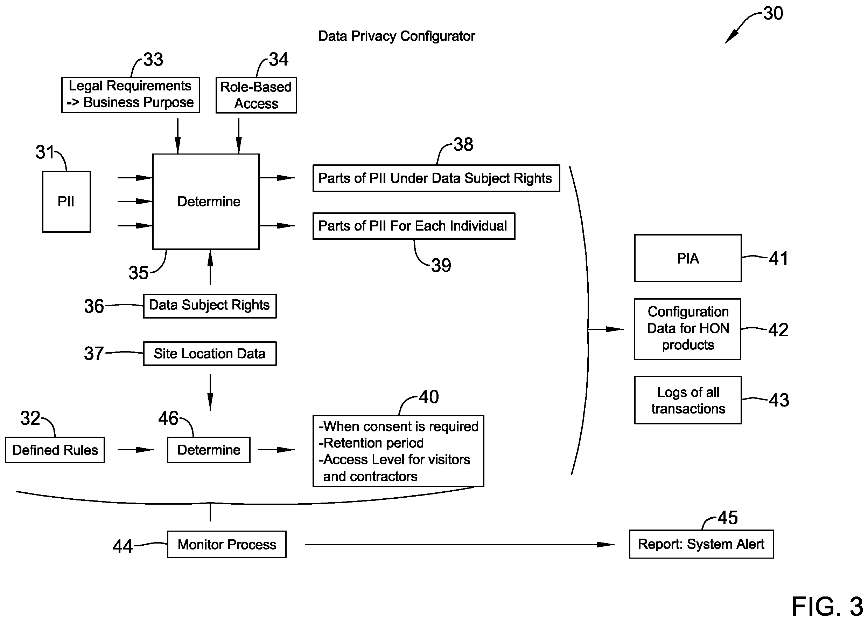

Figure 3 is a schematic block diagram showing an illustrative data privacy configurator 30. The data privacy configurator 30 may be an example of the data privacy configurator 20 of Figures 1 and 2. As shown in Figure 3, the data privacy configurator 30 may include a determine block 35 and a determine block 46. The data privacy configurator 30 may receive, at the determine block 35, a plurality of data privacy settings, such as, for example, a data privacy setting for each of a plurality of types of personal identifiable information (PII) 31 (e.g., PII 25a), a data privacy setting for one or more legal requirements 33 (e.g., legal requirements 25e), a data privacy setting for a role-based access 34 (e.g., role-based access 25d), and a data privacy setting for a data subject rights 36 (e.g., data subject rights 25f). The data privacy configurator 30 may determine, at block 35, which parts of the PII 31 fall under the data subject rights 36, as referenced at block 38, and which parts of the PII 31 can be viewed and changed for each user in each particular role, as referenced at block 39. For example, a human resources administrator may be granted access to more PII 31 data than the other employees.

The data privacy configurator 30, at the determine block 46, may receive a plurality of data privacy settings, such as, for example, a set of defined rules 32 (e.g., define rules 25c) and site location data 37 (e.g., site location data 25b). The data privacy configurator 30 may use the data privacy settings received at block 46, to determine when consent is required by the user to access and/or change the PII 31, a data retention period which determines how long the PII 31 may be stored, and the access level required to access the PII 31.

The data privacy configurator 30 may generate a privacy impact assessment report (PIA) 41 that documents the plurality of data privacy settings for each of the plurality of the types of PII 31. The PIA 41 may further include one or more constraints. The one or more constraints may be set in the building management system 10 for each of the plurality of types of PII 31, based at least in part on the corresponding plurality of data privacy settings. The one or more constraints may include one or more of: use constraints, access constraints, and retention constraints. In some cases, the one or more constraints may include constraints on where at least some of the plurality of types of PII 31 may be geographically processed and/or stored. In some cases, the building management system 10 may be subsequently operated in accordance with the set constraints.

The data privacy configurator 30 may further generate configuration data for products used with the building management system 10, as referenced at block 42, and a log of all transactions 43. For example, the log of all transactions 43 may include one or more requests submitted to exercise one or more of the data subject rights 36 (e.g., a user's rights) associated with the type of PII 31 and the corresponding responses to the requests. In some cases, the data privacy configurator 30 may be configured to monitor the data privacy process, at block 44, and when necessary, create a system alert 45, in which an alert is sent to a user (e.g. administrator or manager) if and when any edits to the building management system 10 and/or the settings for the plurality of data privacy settings that are not compliant with the user defined data privacy settings are found.

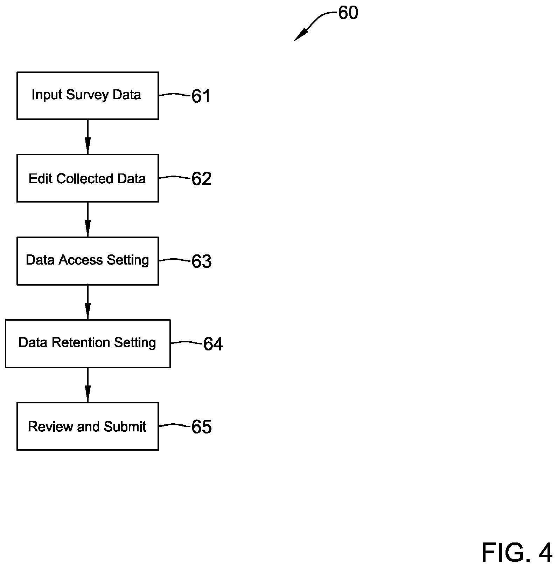

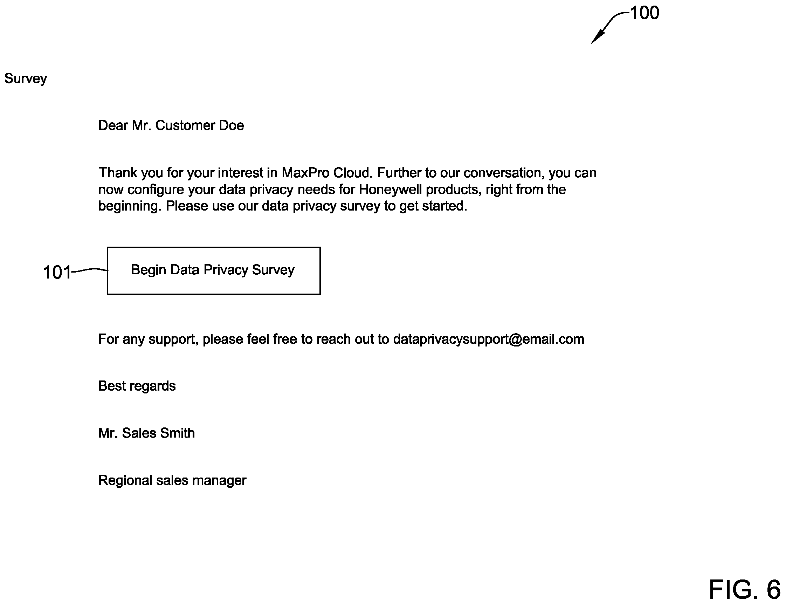

Figure 4 is a flow diagram showing an illustrative method 60 that may be carried out via a user of the building management system 10 and the data privacy configurator 20, 30 of Figures 1 and 3. At block 61, the user (e.g. administrator) may receive an email with a link to import a data privacy survey (e.g., customer survey 22). The user may then edit the data to be collected, at block 62. For example, data to be collected may include a plurality of types of personal identifiable information (PII) such as, but not limited to, a user's name, the user's email address, the user's phone number, the user's gender, the user's nationality, the user's Visa number, the user's passport number, the user's driver's license number, the user's photograph, the user's badge number, the user's government identification number, and the user's license plate number. The user may select which types of PII will be collected and which components of the building management system 10 will collect each respective type of PII. At block 63, the user may select a data access setting. In other words, the user may select who (e.g. by role) can access, view, delete, and/or edit various types of PII. For example, a HR manager may have access to each type of PII whereas an engineer employee may only have access to the employee's photo, phone number, and name. This is just an example. Further examples will be discussed with reference to Figures 6-33.

At block 64, the user may set the data retention setting. This allows the administrator to determine how long certain information is stored within the memory of the building management system 10. For example, if an employee is terminated, the protocol for data retention on the terminated employee may be six months. In this case, six months after the employee has been terminated, all PII for that employee will be deleted from the memory of the building management system 10. Upon completion of the data privacy survey, the administrator may review and submit the survey, which then alerts an installer of the building management system product that is going to be installed at the administrator's site that the survey is complete.

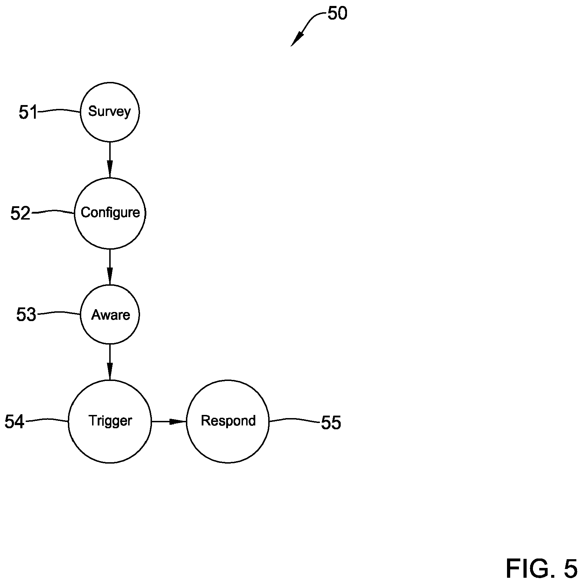

Figure 5 is a flow diagram showing an illustrative method 50 that may be carried out via the building management system 10 and the data privacy configurator 20, 30 of Figures 1 and 3. At block 51, a user has received a data privacy survey (e.g., customer survey 22) for customizing the data to be collected by the various components of the building management system 10 that is to be configured at their site. The user has received the survey, at block 51, after physical installation of the privacy product has been installed in the building management system 10. In some cases, the building management system 10 may include one or more video cameras. The user may select the information the respective video cameras may store within a memory, such as, for example, an image of a license plate on a vehicle. The survey may further customize the handling of personal identifiable information (PII) based upon company policies. Once the user has completed the survey, the user may submit the survey and an installer is alerted that the survey is complete. At block 52, the installer may configure the privacy product by customizing the data privacy settings as instructed by the user via the data privacy survey. Once the installer has completed the configuration of the privacy product, the commissioning of the privacy product is complete, and the building management system 10 is equipped with the data privacy product. The privacy product then enforces the privacy settings in the underlying building management system.

In some cases, the user (e.g. administrator) is made aware of a privacy data breach, at block 53. The privacy data breach may include a change made to the operation of the building management system 10 that is not in compliance with the plurality of data privacy settings for each of the various types of PII, as set by the user (e.g. administrator). When the user is made aware of the data breach, the user may determine what triggered the breach, at block 54. In some cases, an alarm indicating a breach may occur when an unauthorized user (e.g., an employee without proper authority) makes an attempt to delete privacy data from the memory. In such cases, the user (e.g. administrator) may request for an action to be raised against the breach, and a human resources user may respond to the request for an action, at block 55. In the example of an unauthorized user attempting to delete privacy data from the memory, the human resources user may respond by contacting the unauthorized user and revoking privileges within the building management system 10. This is just an example. Further examples will be discussed with reference to Figures 6-33.

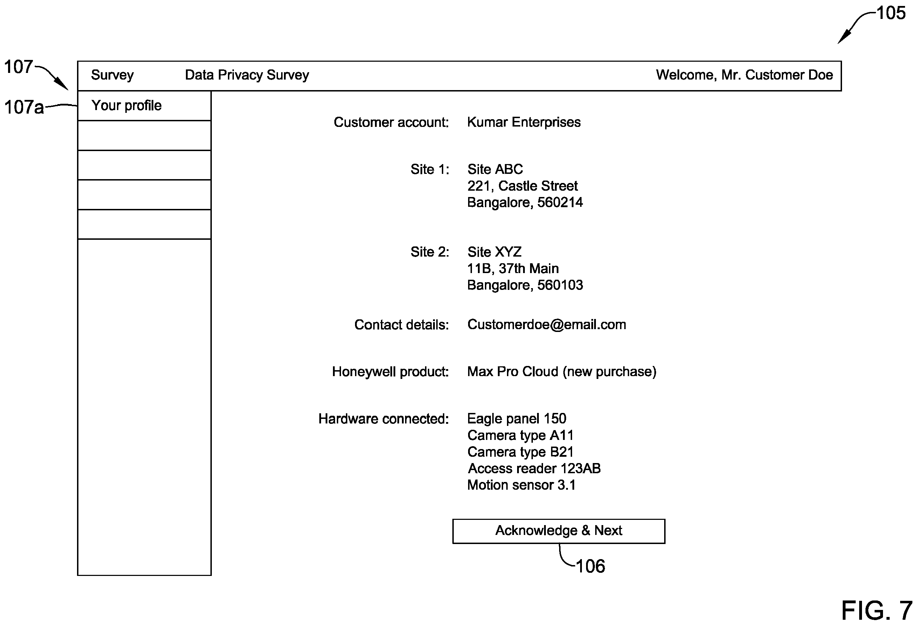

Figures 6-11 show illustrative screens of an illustrative data privacy survey (e.g., customer survey 22) presented to a user (e.g. administrator). In some cases, a user may purchase a data privacy product for a building management system 10. Figure 6 shows an illustrative screen 100 in which the user, Mr. Customer Doe, has received an email providing a link 101 to the data privacy survey. The user may then click on the link 101 provided, which brings the user to screen 105, as shown in Figure 7. As shown in Figure 7, the screen 105 may include a menu 107 in which the user may select a desired tab. For example, in Figure 7, the user has selected a "your profile" tab 107a from the menu 107. As shown, the user's profile is shown on the screen 105. The user's profile may include the user's customer account, the user's building sites, the user's contact details, the building management product in use by the user, and the connected hardware. The user may view the user's profile and in some cases, may choose to edit the information shown if the information is found to be incorrect or incomplete. In other cases, when the information is found to be correct, the user may click an "acknowledge and next" tab 106.

In the example shown, upon clicking tab 106, the user is brought to screen 110, which illustrates a "collected data" tab 107b from the menu 107, as shown in Figure 8. As shown in Figure 8, the screen 110 may include a region of selection 113. The region of selection 113 may include one or more types of personal identifiable information (PII) data that will be collected by the various components of the building management product installed at the user's site. In the example shown, the Access reader 123 AB collects employee numbers, the Camera type A11 collects voice and vehicle numbers, and MaxPro Cloud Entry collects photo and access card numbers. The user may choose to move on to the next screen, by clicking on the "next" tab 112. In some cases, the user may choose to go the previous screen by selecting the "previous" tab 111.

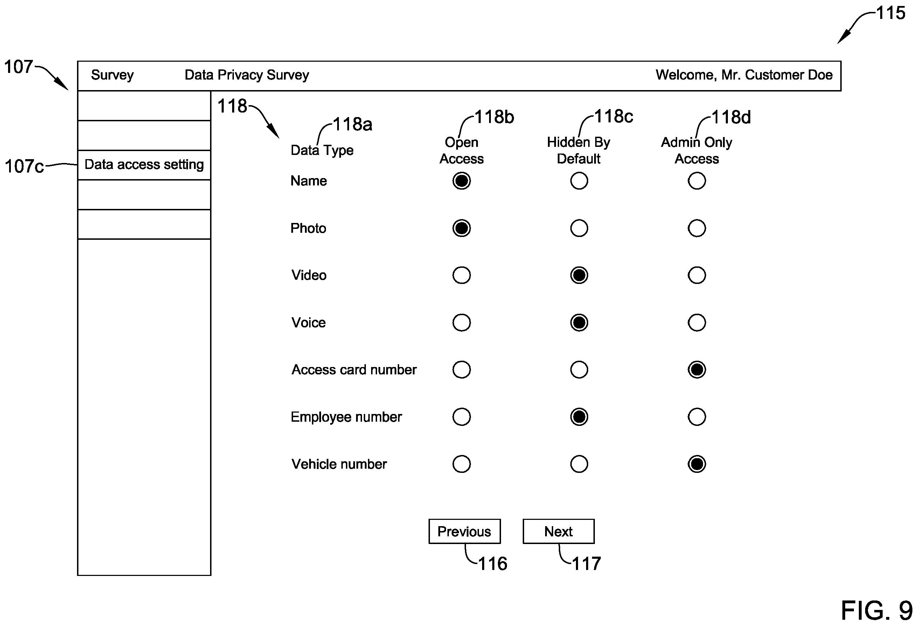

In the example shown, upon clicking tab 112, the user is brought to screen 115, which illustrates a "data access setting" tab 107c from the menu 107, as shown in Figure 9. As shown in Figure 9, the screen 115 includes a region of selection 118. The region of selection 118 may include one or more data types 118a as well as who may access each data type 118a. The data types 118a include the data types that are collected by the various components of the building management product installed at the user's site, as shown in Figure 8. As shown, the user may select open access 118b, hidden by default 118c, or admin only access 118d. In some cases, the user may select open access 118b for the name and the photo data types 118a. In such cases, the name and the photo of an employee, for example, may be viewed by individuals who access the building management system 10. In other cases the user may select admin only access 118d for the access card number and the vehicle number data types 118a. In this case, only individuals with administrative access to the building management system 10 may view the information. Once the user has completed the data access setting 107c page, the user may choose to move on to the next screen, by clicking on the "next" tab 117. In some cases, the user may choose to go the previous screen by selecting the "previous" tab 116.

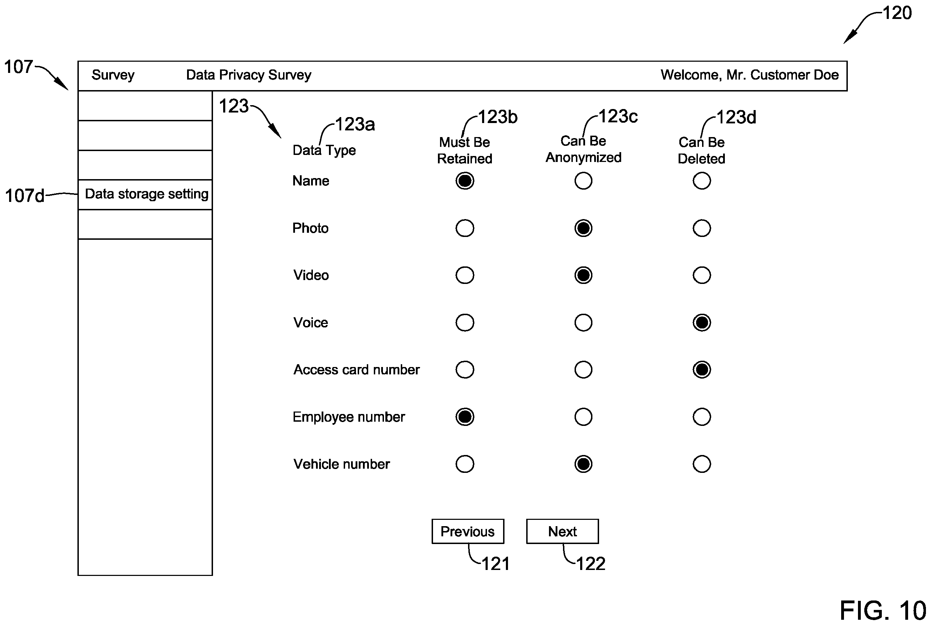

In the example shown, upon clicking tab 117, the user is brought to screen 120, which illustrates a "data storage setting" tab 107d from the menu 107, as shown in Figure 10. As shown in Figure 10, the screen 120 may include a region of selection 123. The region of selection 123 may include one or more data types 123a as well as the instructions regarding the data type 123a. For example, the instructions may include must be retained 123b, can be anonymized 123c, and can be deleted 123d. In some cases, as shown, the user may instruct the data privacy configurator (e.g., data privacy configurator 20 or 30) of the building management system 10 to retain the name and the employee number data types 118a. In some cases, as shown, the user may instruct the data privacy configurator (e.g., data privacy configurator 20 or 30) of the building management system 10 to set the voice and the access card number data types 118a to can be deleted. Once the user has completed the data storage setting 107d page, the user may choose to move on to the next screen, by clicking on the "next" tab 122. In some cases, the user may choose to go the previous screen by selecting the "previous" tab 121.

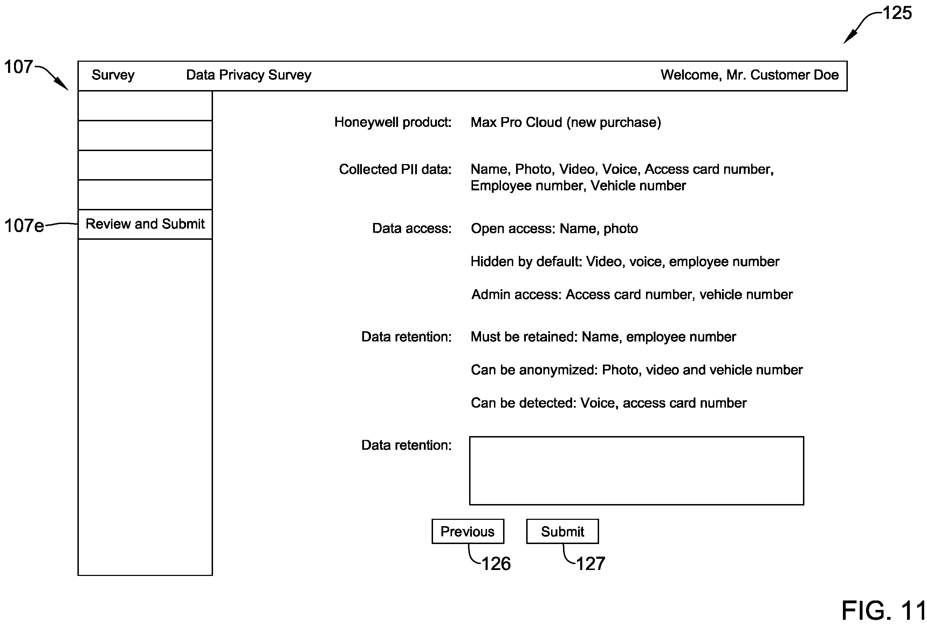

Upon clicking tab 121, the user may be brought to screen 125, which illustrates a "review and submit" tab 107e from the menu 107, as shown in Figure 11. As shown in Figure 11, the screen 125 may include a review of the information selected in the previous screens 105, 110, 115, and 120. For example, the screen 125 may include the name of the product purchased for the building management system 10, the collected PII data, the data access policy, and the data retention policy. The user may further include any comments prior to submitting the data privacy survey. Once complete, the user may select the "submit" tab 127, which will then submit the data privacy survey to an installer of the purchased product for the building management system 10. In some cases, the user may choose to go to the previous screen by selecting the "previous" tab 126.

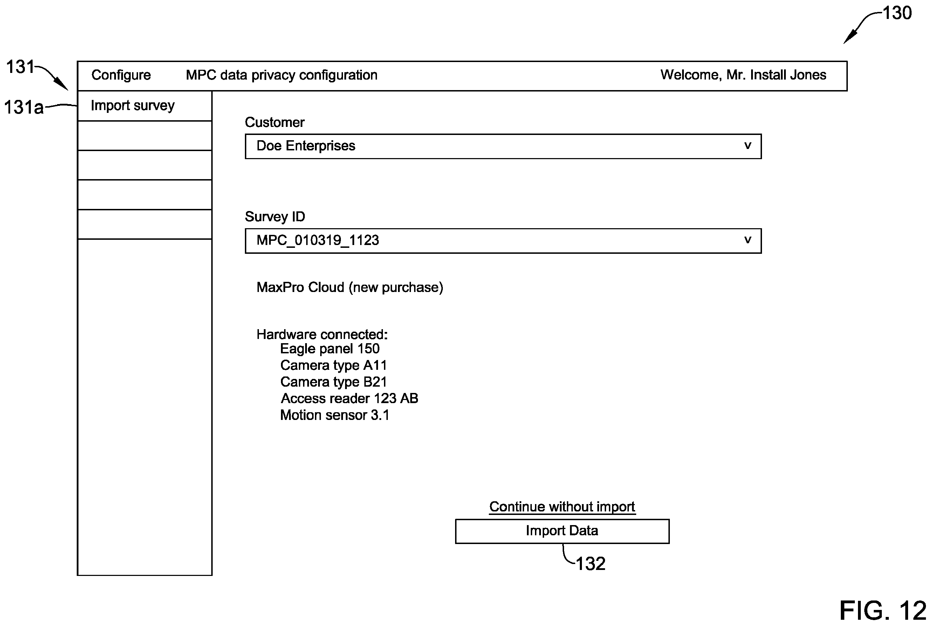

Figures 12-16 show illustrative screens of an illustrative data privacy configuration tool presented to an installer. In some cases, the installer may install the product purchased by the user, click on a link which brings the installer to the data privacy configuration tool. Figure 12 shows an illustrative screen 130 including a menu 131. The menu 131 may include an "import survey" tab 131a, in which the installer, Mr. Install Jones, may view the customer, Doe Enterprises, and import the data privacy survey completed by the customer. The installer may click on the "import data" tab 132 to begin the import. In some cases, the installer may choose to continue without importing the data, and may select "continue without import".

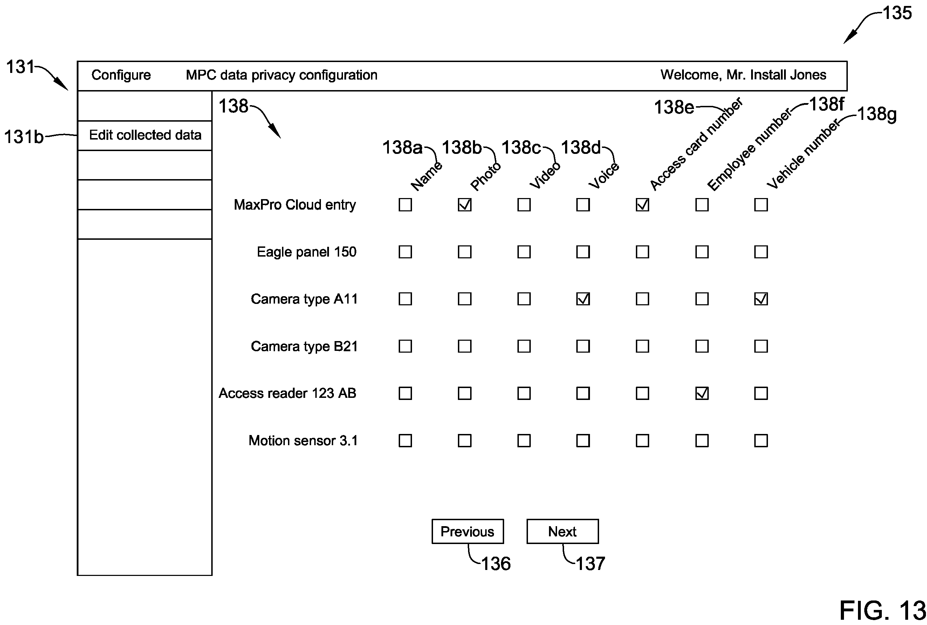

Upon clicking tab 132, the installer is brought to screen 135, which illustrates an "edit collected data" tab 131b of the menu 131, as shown in Figure 13. As shown in Figure 13, the screen 135 may include a region of the screen 138. The region of the screen 138 may include one or more types of personal identifiable information (PII) data that may be collected by one or more components of the building management system 10. For example, the various types of data may include a name 138a, a photo 138b, a video 138c, a voice recording 138d, an access card number 138e, an employee number 138f, and a vehicle number 138g. The installer may view which components provide the various types of data. The installer may choose to move on to the next screen by selecting a "next" tab 137. In some cases, the installer may choose to return to the previous screen by selecting a "previous" tab 136.

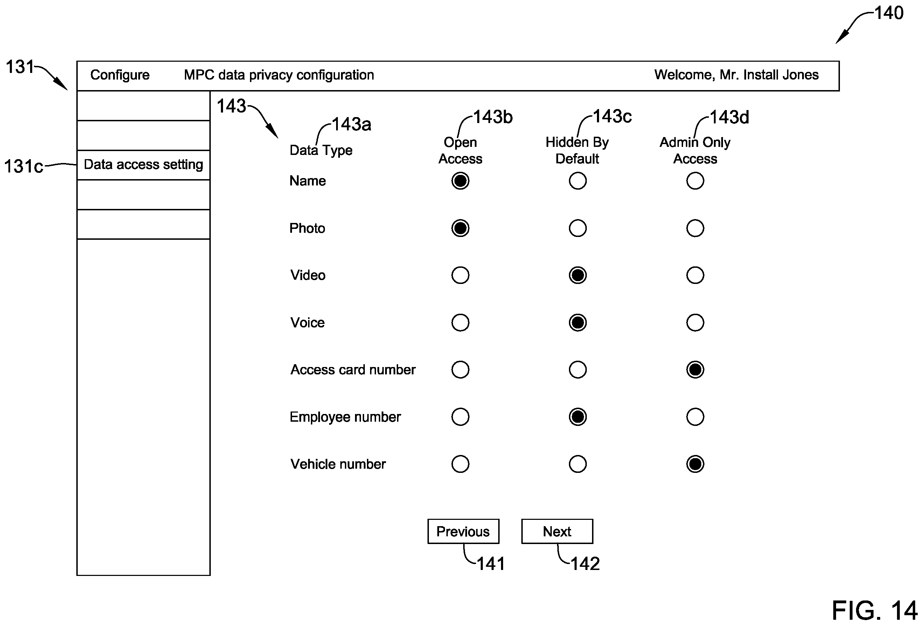

Upon clicking tab 137, the installer may be brought to screen 140, which illustrates a "data access settings" tab 131c from the menu 131, as shown in Figure 14. As shown in Figure 14, the screen 140 may include a region of the screen 143. The region of the screen 143 may include one or more data types 143a as well as who may access each data type 143a. For example, as shown, the selections may include open access 143b, hidden by default 143c, or admin only access 143d. The installer may then select who has access to which data type 143a, based upon the data privacy survey submitted by the customer. The installer may choose to move on to the next screen, by clicking on the "next" tab 142. In some cases, the user may choose to go the previous screen by selecting the "previous" tab 141.

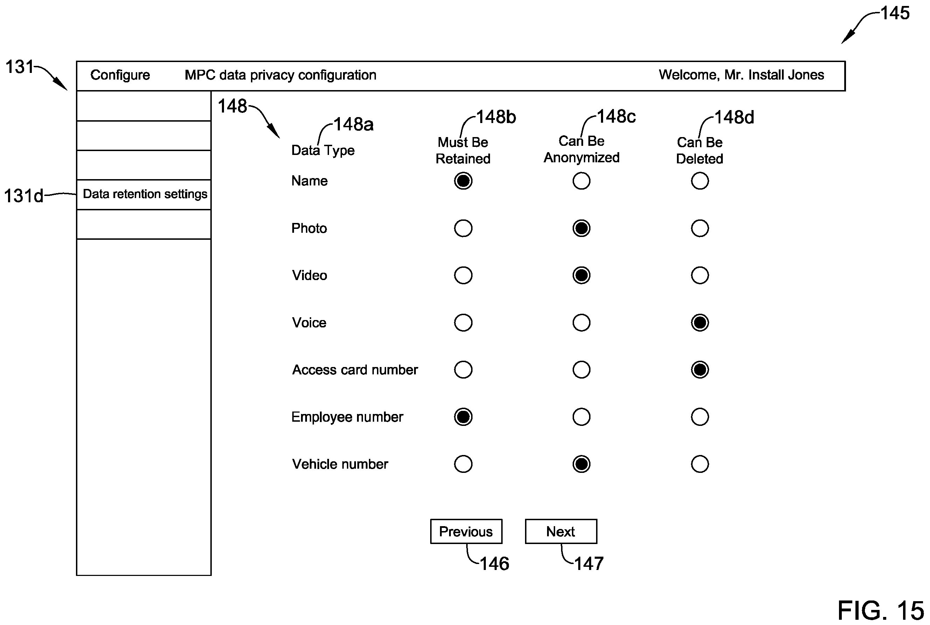

In the example shown, upon clicking tab 143, the installer is brought to screen 145, which illustrates a "data retention settings" tab 131d from the menu 131, as shown in Figure 15. As shown in Figure 15, the screen 145 may include a region of the screen 148. The region of the screen 148 may include one or more data types 148a as well as the instructions regarding the data type 148a. For example, the instructions may include must be retained 148b, can be anonymized 148c, and can be deleted 148d. The installer may choose to move on to the next screen, by clicking on the "next" tab 147. In some cases, the user may choose to go the previous screen by selecting the "previous" tab 146.

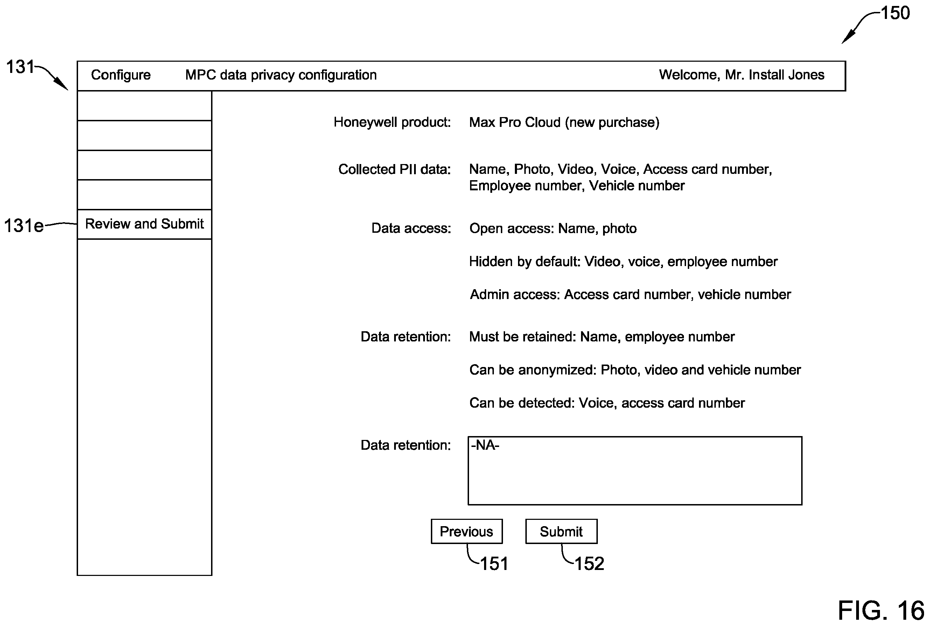

Upon clicking tab 147, the installer is brought to screen 150, which illustrates a "review and submit" tab 131e from the menu 131, as shown in Figure 16. As shown in Figure 16, the screen 150 may include a review of the information selected in the previous 130, 135, 140, and 145. For example, the screen 150 may include the name of the product purchased for the building management system 10, the collected PII data, the data access policy, and the data retention policy. The installer may view any comments included by the user prior to submitting the data privacy configuration. This conveys the necessary information for the installer to properly configure the building management product with the desired privacy settings. In some cases, this configuration is automatically performed by the data privacy configurator after the installer initiates the process. On other cases, the installer makes the necessary privacy settings in the building management system product. In yet other cases, the installer is aided by macros of the data privacy configurator to made the proper privacy setting changes.

Once complete, the installer may select the "submit" tab 152, which will then submit the data privacy configuration for the purchased product for the building management system 10. The customer may then be notified that the product with the data privacy configurator (e.g., data privacy configurator 20 or data privacy configurator 30) has been commissioned, and the employees of the customer, "Doe Enterprises", may be notified about their privacy rights pertaining to the product implemented in the building management system 10. In some cases, the user may choose to go to the previous screen by selecting the "previous" tab 126.

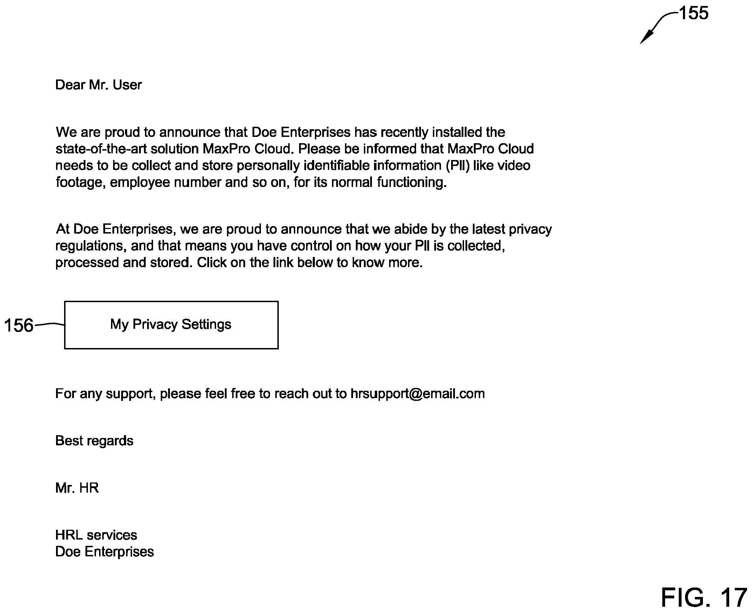

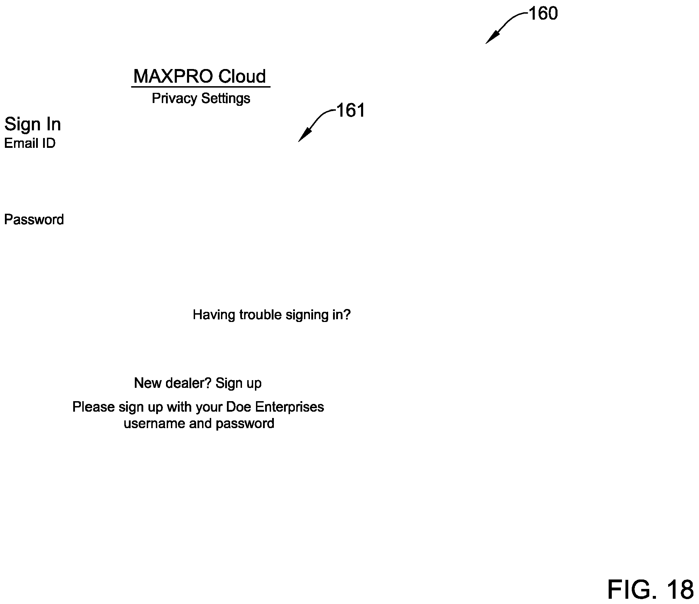

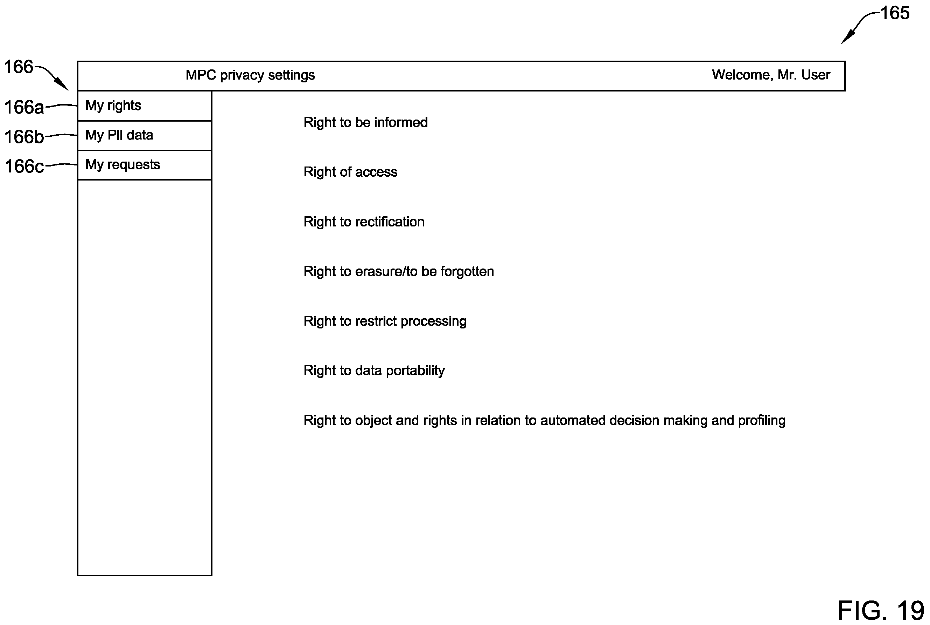

Figures 17-21 show illustrative screens in which a user (end user) may view their data privacy settings. The user may include one or more employees of the customer, "Doe Enterprises". In some cases, the customer may add personal information fields to the data privacy settings, which may automate and/or synchronize with a company policy. Figure 17 shows an illustrative screen 155 in which the user, Mr. User, has received an email from human resources (HR) of the company Doe Enterprises, providing a link 156 to access "my privacy settings". The user may then click on the link 156 provided, which brings the user to screen 160, as shown in Figure 18. As shown in Figure 18, the screen 160 may require the user to sign in to the privacy settings for the newly installed product, using their Doe Enterprises username and password, as indicated at 161. The user may sign in at 161, which may bring the user to screen 165, as shown in Figure 19. As shown in Figure 19, the screen 165 may include a menu 166. In Figure 19, a "my rights" tab 166a of the menu 166 includes a review of the user's rights regarding the user's personal identifiable information (PII). The user's rights may include a right to be informed, a right of access, a right to rectification, a right to be forgotten, a right to restrict processing, a right to data portability, a right to object and/or rights in relation to automated decision making and profiling. The user may choose to move to the next tab of the menu 166, by selecting a tab "my PII data" 166b.

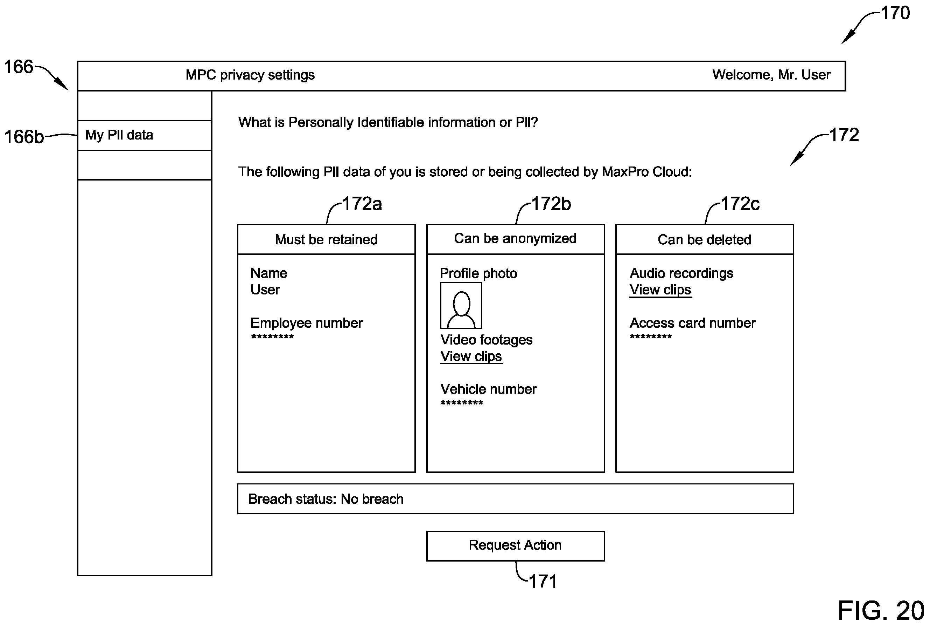

Upon selecting tab 166b, the user may be brought to screen 170, as shown in Figure 20. As shown in Figure 20, the screen 170 may include a region of the screen 172. The region of the screen 172 may include a definition of personal identifiable information (PII) as well as what PII data of the user is being stored or being collected by the product installed in the building management system 10. As shown, the user may view the information that must be retained 172a, the information that can be anonymized 172b, and the information that can be deleted 172c, as setup by the administrator as described above. The region of the screen 172 further includes a notification of a breach status, in which the user would be notified if a breach regarding the user's PII has occurred. In some cases, the user may choose to make a change to the PII stored or collected. For example, the user may want to update their photo that is stored by the product within the building management system 10. In such cases, the user may request the change by selecting the "request action" tab 171.

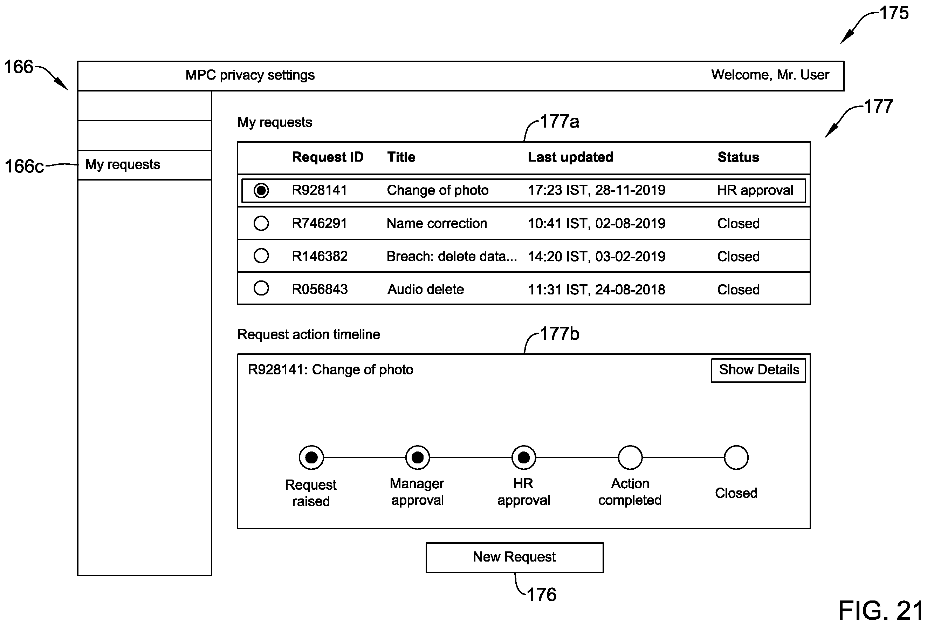

Figure 21 illustrates a screen 175 that depicts a "my requests" tab 166c of the menu 166. The screen 175 may include a region of the screen 177 that displays "my requests" 177a and a "request action timeline" 177b. The user may view on the screen 175 which actions have been submitted, and of those actions submitted, which actions have been completed and which actions are still pending. For example, the screen 175 tells the user in the "request action timeline" 177b, that the change of photo request was submitted, the manager has approved the request, and the request is now pending approval from human resources (HR). In some cases, the user may elect to submit a new request by selecting the "new request" tab 176.

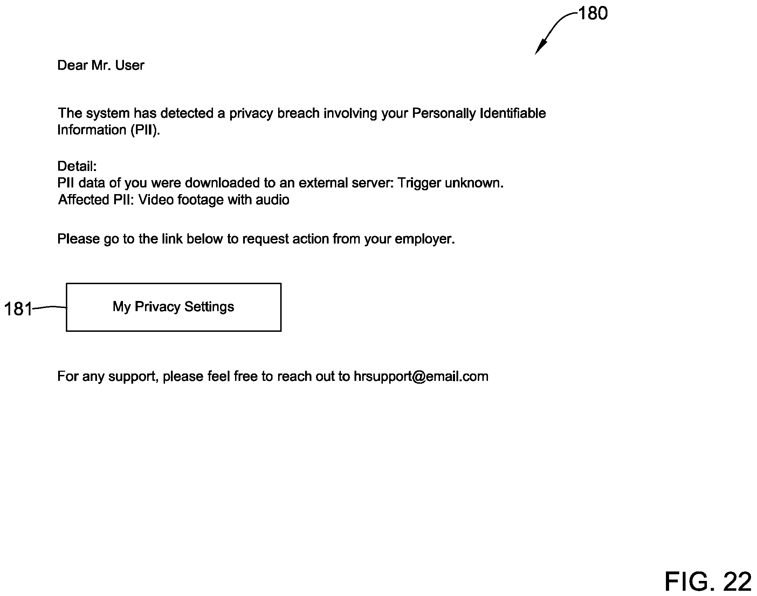

Figures 22-28 show illustrative screens in which a user is notified of a data breach. In some cases, a breach may occur within the building management system 10 that may include PII data for the user. In such cases, the relevant employees may receive an email notifying them about the breach. Figure 22 shows a screen 180 depicting an illustrative email that might be sent to the user alerting the user of a privacy breach involving the user's PII. The email may include the detail of the data breach as well as a link, "my privacy settings" 181 for the user to view the details of the data breach and request an action. Upon clicking the link 181 in the email, the user may be taken to the privacy settings portal, where the user may request an action against the breach.

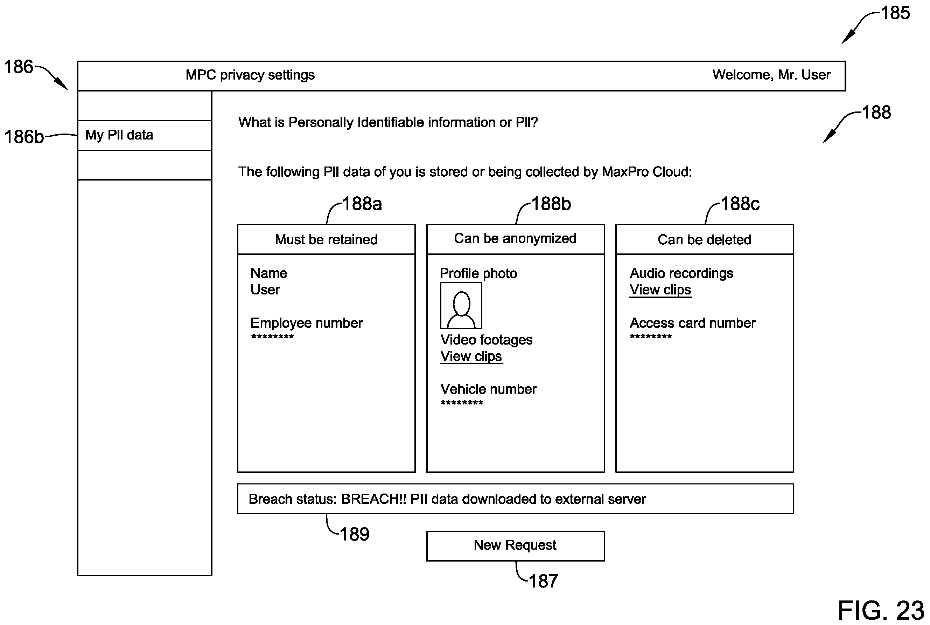

Upon clicking the link 181, the user is brought to screen 185, as shown in Figure 23. As shown in Figure 23, the screen 185 may include a menu 186, and a region of the screen 188. The region of the screen 188 may include the information of the "my PII data" tab 186b, and may include a definition of personal identifiable information (PII) as well as what PII data for the user is being stored or being collected by the product installed in the building management system 10. As shown, the user may view the information that must be retained 188a, the information that can be anonymized 188b, and the information that can be deleted 188c. The region of the screen 185 further includes a notification of a breach status 189, in which the user has been notified of a breach regarding the user's PII has occurred. As shown at 189, the breach status indicates that PII data has been downloaded to an external server. In such cases, the user may view the information regarding the breach by selecting the "breach status" tab 189.

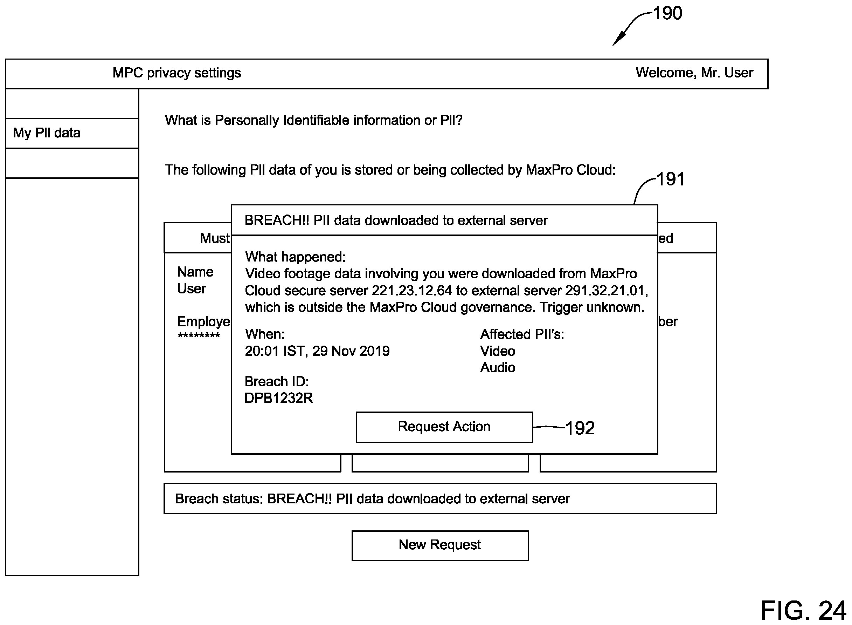

Upon selecting the tab 189, the user may be brought to screen 190, as shown in Figure 24. As shown in Figure 24, the screen 190 includes a pop-up screen 191, which give the user the information about the breach that has occurred. In this example, the breach indicates to the user that video footage data involving the user was downloaded from the secure server to an external server outside of the secure server. The user may select the "request action" tab 192 to take an action against the breach.

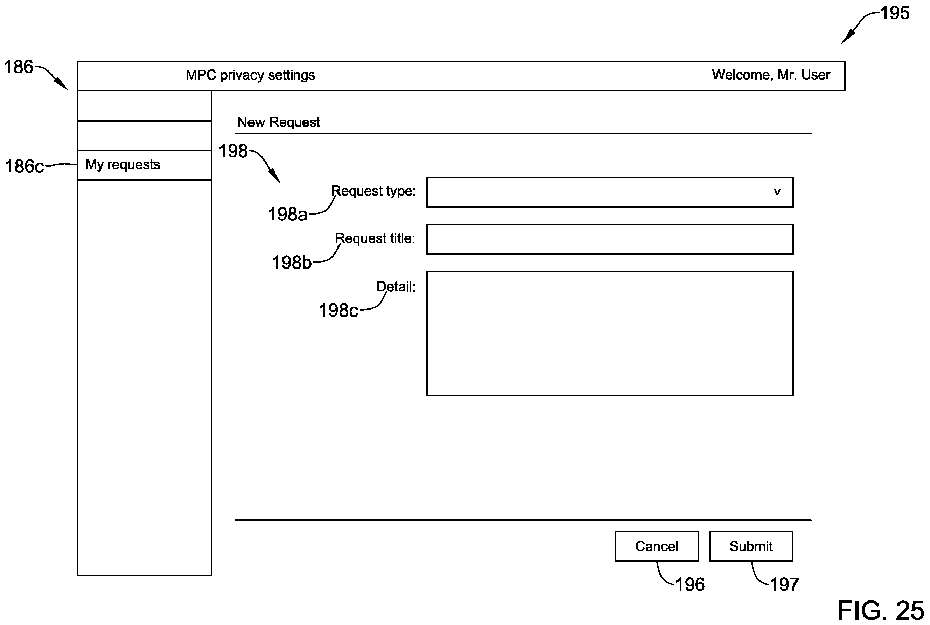

Upon selecting the tab 192, the user is brought the screen 195, as shown in Figure 25. As shown in Figure 25, the screen 195 includes the menu 186 and a region of the screen 198. The region of the screen 198 may be part of a "my requests" tab 186c from the menu 186. The region of the screen 198 may include regions for the user to begin a new request. The new request may include a request type 198a, a request title 198b, and a detail 198c field in which the user can explain the details of the request. Once the user has completed the new request, the user may choose to submit the new request by selecting a "submit" tab 197. In some cases, the user may choose to cancel the new request by selecting a "cancel" tab 196.

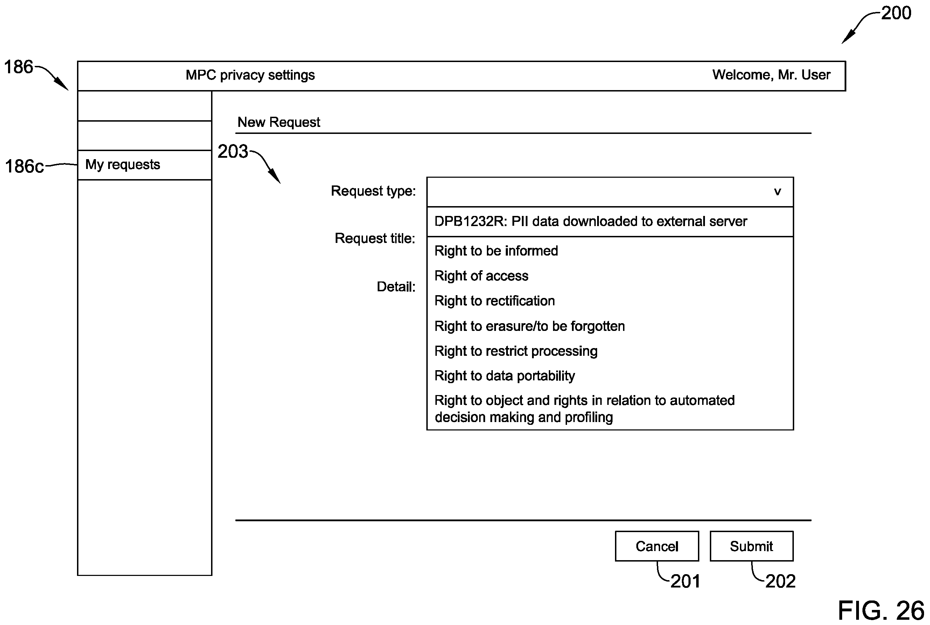

Figure 26 shows one example of a new request to be submitted by the user. As shown in Figure 26, a screen 200 may include a region of the screen 203, which may be part of the "my requests" 186c tab from the menu 186. The region of the screen 203 includes the new request to be submitted by the user. In this example, one or more drop down menus may be provided to aid the user in selecting a request type and a request title. If the user is ready to submit the new request, the user may select a "submit" tab 202. In some cases, the user may choose to cancel the new request by selecting a "cancel" tab 201.

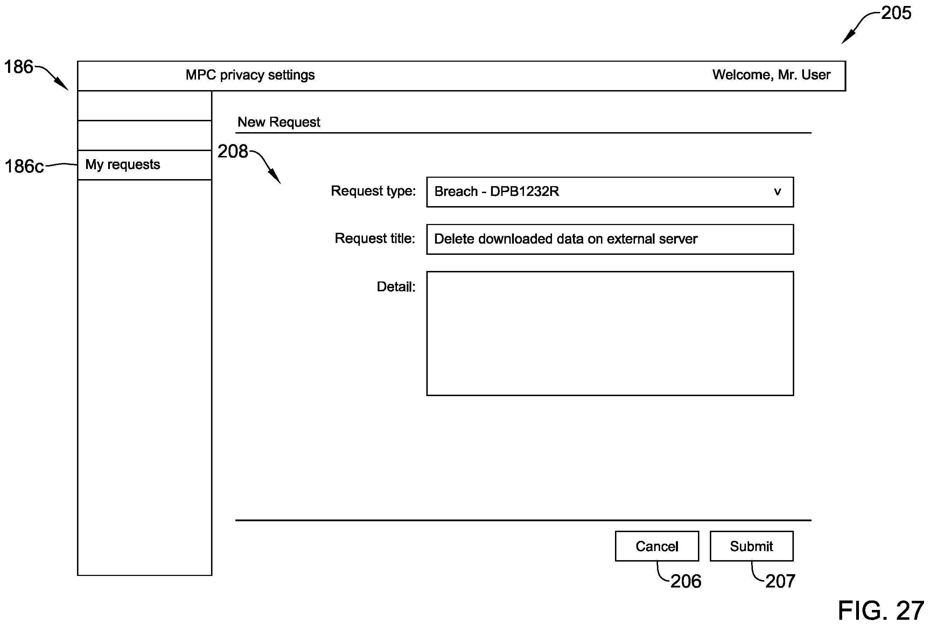

Figure 27 shows another example of a new request to be submitted by the user. As shown in Figure 27, a screen 205 may include a region of the screen 208, which may be a part of the "my requests" 186c tab from the menu 186. The region of the screen 208 includes the new request to be submitted by the user. In this example, the user has included the type of the breach in the "request type" field, and the nature of the request in the "request title" field. If the user is ready to submit the new request, the user may select a "submit" tab 207. In some cases, the user may choose to cancel the new request by selecting a "cancel" tab 206.

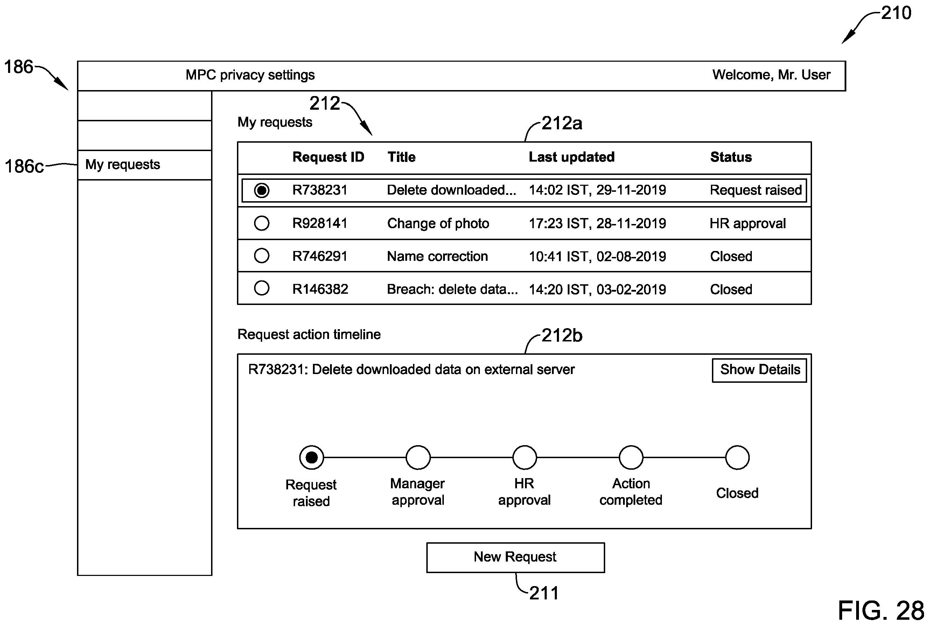

Figure 28 illustrates a screen 210 which may depict the "my requests" tab 186c of the menu 186. The screen 210 may include a region of the screen 212 which may include "my requests" 212a and a "request action timeline" 212b. The user may view on the screen 210 which actions have been submitted, and of those actions submitted, which actions have been completed and which actions are still pending. For example, the screen 210 tells the user in the "request action timeline" 212b, that the "delete downloaded data on external server" request was submitted. The next steps will include manager approval of the request, and approval from human resources (HR). In some cases, the user may elect to submit a new request by selecting the "new request" tab 211. In some cases, the user may receive a system generated email communicating to the user that the request for action has been received and is being processed. In some cases, the request for action may be automatic based on the user approved rights.

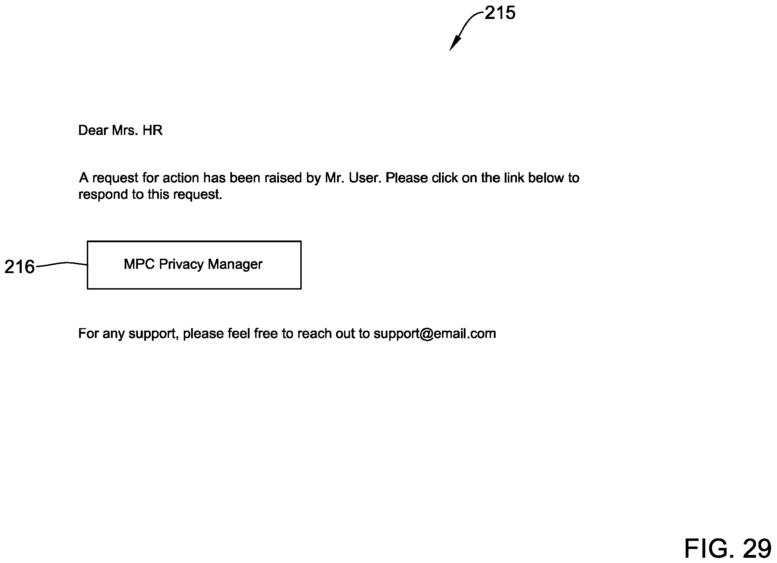

Figures 29-33 show illustrative screens in which a human resources (HR) user is notified of a submitted request. In some cases, a request for action has been raised by an employee against a breach of privacy. The HR user may receive an email notifying the HR user of the request, and a link to the data privacy configurator (e.g., data privacy configurator 20, or data privacy configurator 30) tool to respond to the request. Figure 29 shows a screen 215 depicting an email that could be sent to an HR user alerting the HR user of a request for action raised by an employee, "Mr. User". The email may include a "MPC privacy manager" link 216 for the HR user to view the details of the data breach and the request for action. Upon clicking the link 216 in the email, the HR user may be taken to the privacy manager, where the HR user may respond to the request for action against the breach.

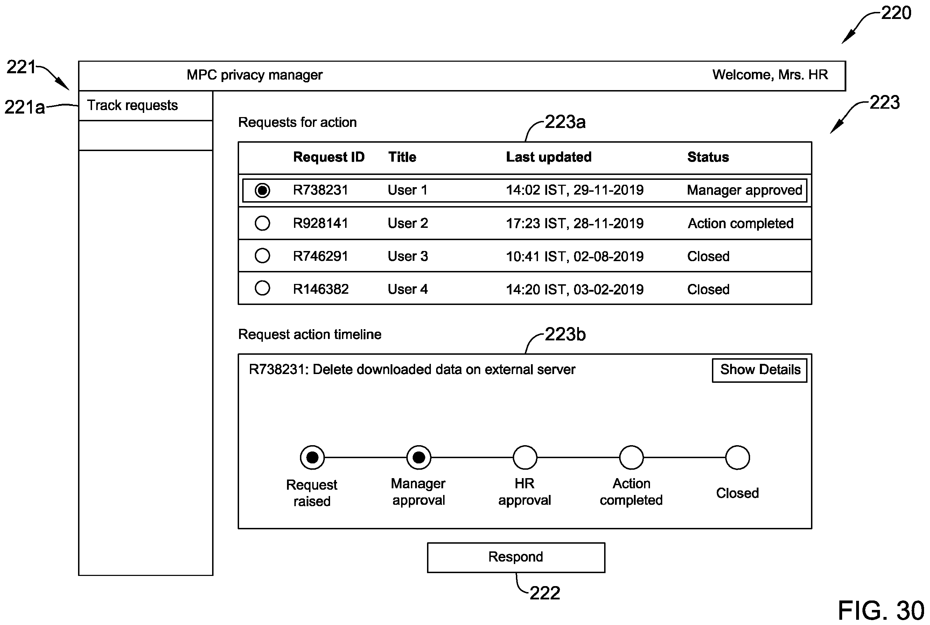

Upon clicking on the link 216 in the email, the HR user may be brought to a screen 220 of the privacy manager, as shown in Figure 30. As shown in Figure 30, the screen 220 may include a region of the screen 223, which may be part of a "track requests" tab 221a of a menu 221. The region of the screen 223 may include a "requests for action" field 223a and a "request action timeline" field 223b. The HR user may view the requests submitted as well as who submitted the requests and what the status of each request is. The HR user may select a request and view the timeline of the request in the "request action timeline" field 223b. In this example, the HR user has selected request ID R738231, which is the request for action against the breach submitted by the user (as shown in Figures 22-28). The HR user may choose to respond to the request for action by selecting the "respond" tab 222.

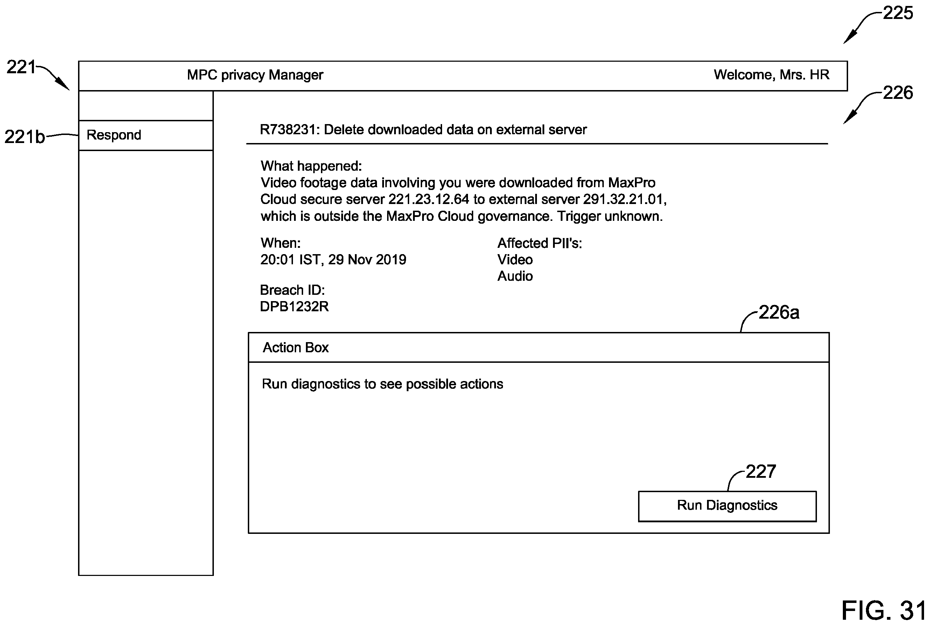

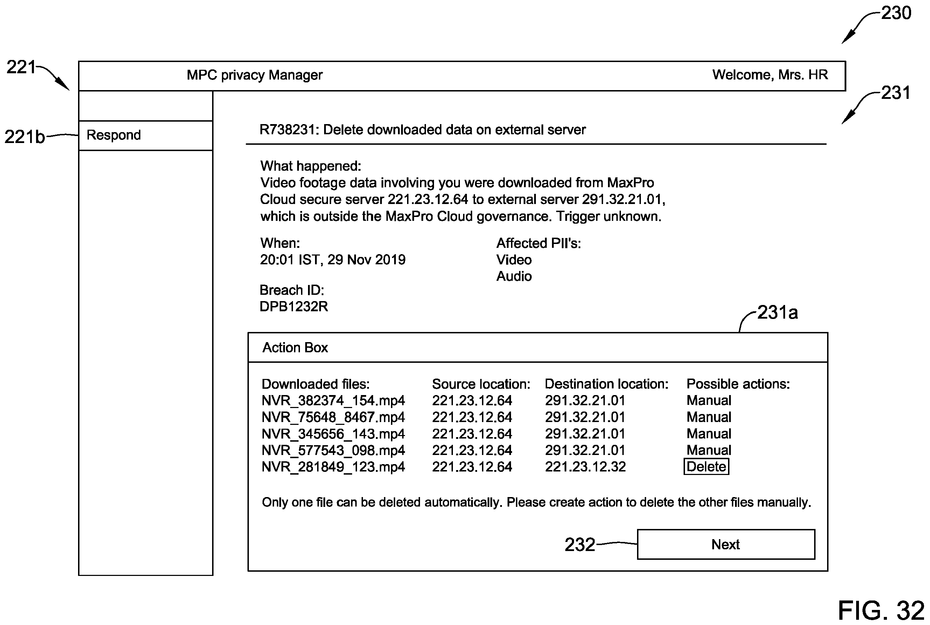

In the example show, upon selecting the "respond" tab 222, the HR user is brought to a screen 225, as shown in Figure 31. As shown in Figure 31, the screen 225 may include a region of the screen 226, which may be part of a "respond" tab 221b of the menu 221. The region of the screen 226 may include the information regarding the data breach against the user, and an "action box" 226a in which the HR user may run a diagnostics test to determine which actions may be taken against the breach. The HR user may select a "run diagnostics" tab 227 to determine which actions may be taken against the breach. When the HR user selects the "run diagnostics" tab 227, the HR user is brought to a screen 230, as shown in Figure 32. As shown in Figure 32, the screen 230 may include a region of the screen 231, which may be part of the "respond" tab 221b of the menu 221. As shown, the region of the screen 231 may include the "action box" 231a which may display the possible actions to be taken against the breach yet consistent with the privacy policy settings set during the privacy survey discussed above. In this example, the "action box" 231a informs the HR user of the downloaded files, the source location, the destination location, and the possible actions. In this case, only one file may be automatically deleted and the HR user must create an action to delete the remaining files manually. When the HR user is ready to move to the next screen, the HR user may select a "next" tab 232.

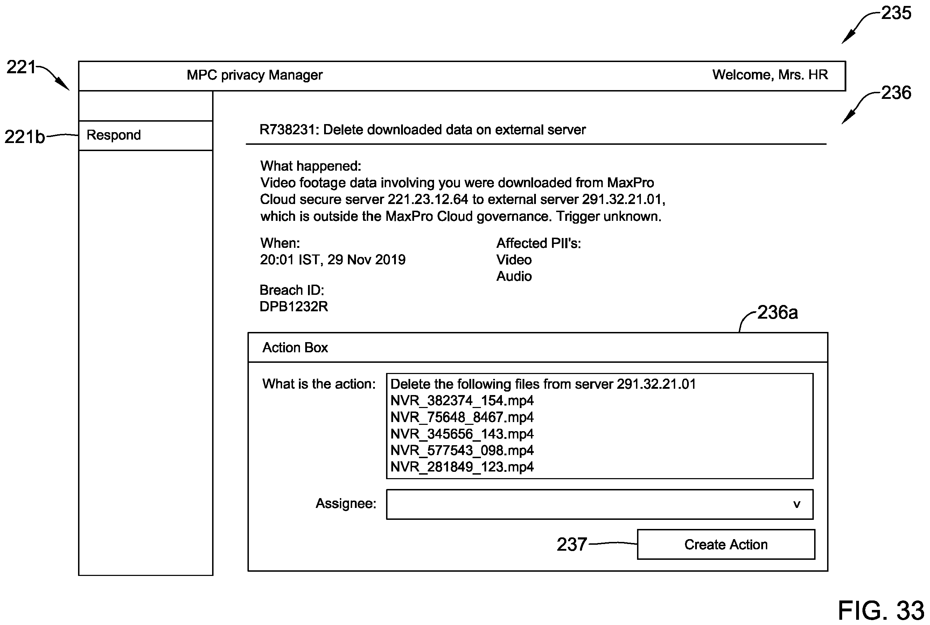

In the example shown, when the HR user selects the "next" tab 232, the HR user is brought to a screen 235, as shown in Figure 33. As shown in Figure 33, the screen 235 may include a region of the screen 236, which may be part of the "respond" tab 221b of the menu 221. As shown, the region of the screen 236 may include the "action box" 236a which may display an action field and an assignee field. In this example, the HR user may create an action to manually delete files from the server. The HR user may then select the action assignee. When the HR user is ready to begin the deletion process, the HR user may select a "create action" tab 237.

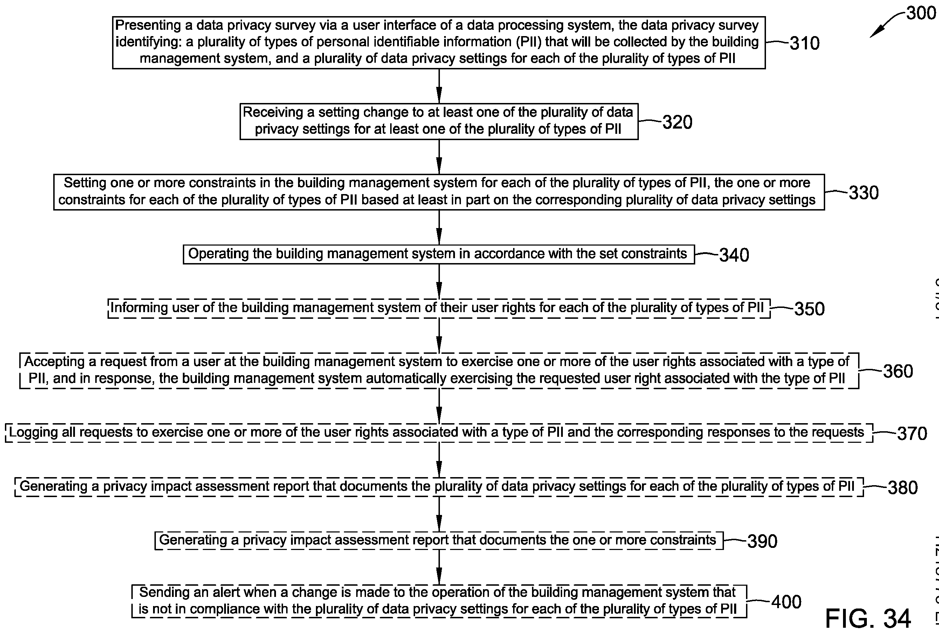

Figure 34 is a flow diagram showing an illustrative method 300 for managing data privacy of personal identifiable information in a building management system. The method 300 may include presenting a data privacy survey via a user interface of a data processing system. In some cases, the data privacy survey may be presented via a sequence of two or more screens via the user interface. The data privacy survey may identify a plurality of types of personal identifiable information (PII) that will be collected by the building management system (e.g., building management system 10), and a plurality of data privacy settings for each of the plurality of types of PII, as referenced at block 310. In some cases, the plurality of types of PII may include one or more of a user's name, a user's phone number, a user's gender, a user's nationality, a user's Visa number, a user's Passport number, a user's driver's license number, a user's biometric data, a user's photograph, a user's badge number, a user's government identification number, a user's license plate number, and a user's location. These are just examples.

The illustrative method 300 may include receiving a setting change to at least one of the plurality of data privacy settings for at least one of the plurality of types of PII, as referenced at block 320. In some cases, the plurality of data privacy settings for each of the types of PII may include one or more of, a sensitivity setting relating to a sensitivity of the corresponding type of PII, a legal requirement setting relating to whether the corresponding type of PII must be retained for legal reasons, a role access setting relating to which user account types can access the corresponding type of PII, a user rights setting relating to the user rights granted to the user for the corresponding type of PII, a location setting relating to the location that the corresponding type of PII was collected, and rules setting relating which of a plurality of rules apply to the corresponding type of PII. These are just examples. The plurality of data privacy settings may define one or more user rights for each of the plurality of types of PII, wherein the user rights may include one or more of a right to be forgotten, a right to data portability, a right to object, a right to rectification, and a right to access control. These are just examples. In cases when the requested user right is a right to be forgotten, the building management system, in response, may delete the user's data associated with the type of PII.

The illustrative method 300 may include setting one or more constraints in the building management system for each of the plurality of types of PII, wherein the one or more constraints for each of the plurality of types of PII are based at least in part on the corresponding plurality of data privacy settings, as referenced at block 330, and operating the building management system in accordance with the set of constraints, as referenced at block 340. In some cases, the one or more constraints may include one or more of use constraints, access constraints, and retention constraints. Further, the one more constraints may include one or more constraints on where at least some of the plurality of types of PII can be geographically processed or stored.

In some cases, the method 300 may include informing users of the building management system of their user rights for each of the plurality of types of PII, as referenced at block 350. In some cases, the method 300 may include accepting a request from a user at the building management system to exercise one or more of the user rights associated with a type of PII, and in response, the building management system may automatically exercise the requested user right associated with the type of PII, as referenced at block 360, and logging all requests to exercise one or more of the user rights associated with a type of PII and the corresponding responses to the requests, as referenced at block 370. The method 300 may include generating a privacy impact assessment report that documents the plurality of data privacy settings for each of the plurality of types of PII, as referenced at block 380, and generating a privacy impact assessment report that documents the one or more constraints, as referenced at block 390. The method 300 may further include sending an alert when a change is made to the operation of the building management system that is not in compliance with the plurality of data privacy settings for each of the plurality of types of PII, as referenced at block 400.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method for managing data privacy of personal identifiable information in a building management system, the method comprising:
presenting a data privacy survey via a user interface of a data processing system, the data privacy survey identifying:
a plurality of types of personal identifiable information (PII) that will be collected by the building management system; and
a plurality of data privacy settings for each of the plurality of types of PII;
receiving a setting change to at least one of the plurality of data privacy settings for at least one of the plurality of types of PII;
setting one or more constraints in the building management system for each of the plurality of types of PII, the one or more constraints for each of the plurality of types of PII based at least in part on the corresponding plurality of data privacy settings; and
operating the building management system in accordance with the set constraints.

2. The method of claim 1, wherein the one or more constraints comprise one or more of use constraints, access constraints and retention constraints.

3. The method of claim 1, wherein the one or more constraints comprise one or more constraints on where at least some of the plurality of types of PII can be geographically processed and/or stored.

4. The method of claim 1, wherein the plurality of data privacy settings define one or more user rights for each of the plurality of types of PII.

5. The method of claim 4, further comprising informing users of the building management system of their user rights for each of the plurality of types of PII.

6. The method of claim 4, wherein the one or more user rights include one or more of:
a right to be forgotten;
a right to data portability;
a right to object;
a right to rectification; and
a right to access control.

7. The method of claim 4, further comprising:
accepting a request from a user at the building management system to exercise one or more of the user rights associated with a type of PII; and
in response, the building management system automatically exercising the requested user right associated with the type of PII.

8. The method of claim 7, wherein the requested user right is a right to be forgotten, and in response, the building management system deletes the user's data associated with the type of PII.

9. The method of claim 7, further comprising logging all requests to exercise one or more of the user rights associated with a type of PII and the corresponding responses to the requests.

10. The method of claim 1, wherein the plurality of data privacy settings for each of the plurality of types of PII comprise one or more of:
a sensitivity setting relating to a sensitivity of the corresponding type of PII;
a legal requirement setting relating to whether the corresponding type of PII must be retained for legal reasons;
a role access setting relating to which user account types can access the corresponding type of PII;
a user rights setting relating to the user rights granted to the user for the corresponding type of PII;
a location setting relating to the location that the corresponding type of PII was collected; and
rules setting relating which of a plurality of rules apply to the corresponding type of PII.

11. The method of claim 1, wherein the plurality of types of PII comprise one or more of:
user's name;
user's phone number;
user's gender;
user's nationality;
user's Visa number;
user's Passport number;
user's driver's license number;
user's biometric data;
user's photograph;
user's badge number;
user's government identification number;
user's license plate number; and
user's location.

12. The method of claim 1, further comprising generating a privacy impact assessment report that documents the plurality of data privacy settings for each of the plurality of types of PII.

13. The method of claim 1, further comprising generating a privacy impact assessment report that documents the one or more constraints.

14. The method of claim 1, further comprising sending an alert when a change is made to the operation of the building management system that is not in compliance with the plurality of data privacy settings for each of the plurality of types of PII.

15. A building management system, comprising:
a memory for storing:
a plurality of types of personal identifiable information (PII) that will be collected by the building management system; and
a plurality of data privacy settings for each of the plurality of types of PII;
a user interface;
a processor operatively coupled to the memory and the user interface, the processor configured to:
present a data privacy survey via the user interface, the data privacy survey identifying:
the plurality of types of personal identifiable information (PII) that will be collected by the building management system; and
the plurality of data privacy settings for each of the plurality of types of PII;
receive a setting change to at least one of the plurality of data privacy settings for at least one of the plurality of types of PII;
set one or more constraints for each of the plurality of types of PII, the one or more constraints for each of the plurality of types of PII based at least in part on the corresponding plurality of data privacy settings; and
operating the building management system in accordance with the set constraints.
